# EUROPEAN PATENT APPLICATION

(11) **EP 1 921 598 A2**
(43) Date of publication of application: **14.05.2008**
(21) Application number: 07021682.5
(22) Date of filing: 08.11.2007
(51) Int. Cl.: G09G 3/36

(54) **Display device and driving method thereof**

(30) Priority: 10.11.2006 KR 20060110882
(71) Applicant: Samsung Electronics Co., Ltd., Yeongtong-gu Suwon-city, Gyeonggi-do 442-742 (KR)
(72) Inventor: Ahn, Ik-Hyun, Chungcheongnam-do (KR); Kim, Woo-Chul, Gyeonggi-do (KR)
(74) Representative: Dr. Weitzel & Partner

(57) **Abstract**

A display device displays an image with high display quality even if a temperature is changed, and includes a driving apparatus. Resistors having the same resistance value are used in a resistor string of a gray voltage generator, and a signal controller converts a number of bits of an input image signal into a signal having an increased number of bits. As a result, dynamic capacitance compensation processing and gamma curve modification can be separated from each other and performed independently when an ambient temperature of the display device is changed.

## Description

### CROSS REFERENCE TO RELATED APPLICATION

This application claims priority from and the benefit of Korean Patent Application No. 10-2006-0110882, filed on November 10, 2006, which is hereby incorporated by reference for all purposes as if fully set forth herein.

### BACKGROUND OF THE INVENTION

### FIELD OF THE INVENTION

The present invention relates to a driving apparatus of a display device and a display device using the same, and more specifically, to a driving apparatus that can efficiently drive a display device in varying temperatures and a display device using the same.

### DISCUSSION OF THE BACKGROUND

A liquid crystal display ("LCD") includes a first display panel having pixel electrodes arranged thereon, a second display panel opposing the first display panel and having a common electrode arranged thereon, and a liquid crystal layer having liquid crystals with anisotropic dielectric constants disposed between the first display panel and the second display panel. The pixel electrodes are arranged in the form of a matrix, and are connected to switching elements, such as thin film transistors (TFTs), to receive data signals according to pixel row. The common electrode receives a common voltage and may extend over substantially the entire second display panel. From an electrical circuit perspective, a pixel electrode, the common electrode, and the liquid crystal layer disposed between the pixel electrode and the common electrode form a liquid crystal capacitor. The liquid crystal capacitor together with a switching element connected thereto form a basic unit for a pixel.

The LCD generates an electric field in the liquid crystal layer by applying a potential difference between the pixel electrode and the common electrode, and adjusts the intensity of the electric field to control the transmittance of light passing through the liquid crystal layer, thereby displaying a desired image. In order to prevent the liquid crystal layer from deteriorating due to extended application of the unidirectional electric field, the voltage polarity of the data signal may be inverted per frame, per pixel row, or per pixel with respect to the common voltage.

An LCD may be used both indoors and outdoors, but its operation may depend on the temperature in which the LCD is used, which may be referred to as the ambient temperature. Display characteristics change according to the ambient temperature. Specifically, a response speed of liquid crystals in the liquid crystal layer may decrease as the ambient temperature decreases. This may result in additional time for the liquid crystals to be reoriented into the desired alignment corresponding to the applied electric field. In this instance, a signal controller may process an input signal according to a change in display characteristics. An option to correct for the change in display characteristics would be to increase the level of the voltage signal when the ambient temperature decreases. However, resistors applied to a resistor string of a gray voltage generator have different resistance values per segment, and may not be able to generate gray voltages having the correct intervals therebetween in response to a change in display characteristics. As a result, driving efficiency may deteriorate when there is a change in display characteristics.

Moreover, liquid crystals in a liquid crystal layer of an LCD have a light transmittance that corresponds to a level of an applied voltage, or a gray scale. This relationship is defined as a curve referred to as a gamma curve. The gamma curve may be temperature dependent. If a gamma curve changes when the ambient temperature changes, a lookup table stored in the LCD device may be reset to correspond to the new ambient temperature. However, it requires time and consumes resources to change values in the lookup table, which makes it difficult to apply the gamma curve to the display device in an optimum state under varying ambient temperatures and display characteristics.

### SUMMARY OF THE INVENTION

This invention provides a display device that may efficiently drive a display device to display an image in an optimum state so that display quality is not lowered even if a temperature changes, and a driving apparatus thereof.

Additional features of the invention will be set forth in the description which follows, and in part will be apparent from the description, or may be learned by practice of the invention.

The present invention discloses a driving apparatus of a display device including a signal controller to output image data with a bit number that is larger than a bit number of input data, and a gray voltage generator to convert the image data outputted from the signal controller into data voltages and to generate gray voltages corresponding to the image data.

The present invention also discloses a driving apparatus of a display device including a signal controller to receive input data having a first number of bits and to output an output data having a second number of bits that is larger than the first number of bits, and a gray voltage generator to convert the second number of bits of the output data into data voltages. The data voltages of a number corresponding to the first number of bits are selected from data voltages corresponding to the second number of bits and outputted. Intervals between adjacent data voltages corresponding to the second number of bits are constant such that the data voltages linearly increase.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram of an LCD device according to an exemplary embodiment of the present invention.

FIG. 2 is an equivalent circuit diagram of a pixel of the LCD device shown in FIG. 1.

FIG. 3 is a block diagram of a signal controller according to an exemplary embodiment of the present invention.

FIG. 4 is a block diagram of a signal controller according to another exemplary embodiment of the present invention.

FIG. 5 is a circuit diagram of a gray voltage generator according to an exemplary embodiment of the present invention.

FIG. 6 is a graph illustrating an output voltage depending on a data voltage inputted into a data driver according to an exemplary embodiment of the present invention.

### DETAILED DESCRIPTION OF THE ILLUSTRATED EMBODIMENTS

The present invention will be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity. The regions illustrated in the figures are schematic in nature and their shapes are not intended to illustrate the actual shape of a region of a device and are not intended to limit the scope of the invention.

In the drawings, the thickness of layers, films, panels, regions, etc., are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the invention. As used herein, the singular forms "a", "an" and "the" are intended to include the plural forms as well, unless the context clearly indicates otherwise, It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the present invention will be described in detail with reference to the accompanying drawings.

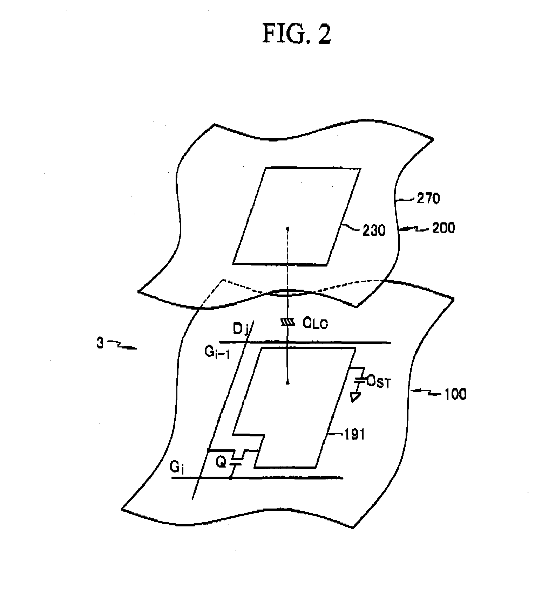

First, an LCD device according to an exemplary embodiment of the present invention will be described in detail with reference to FIG, 1 and FIG. 2.

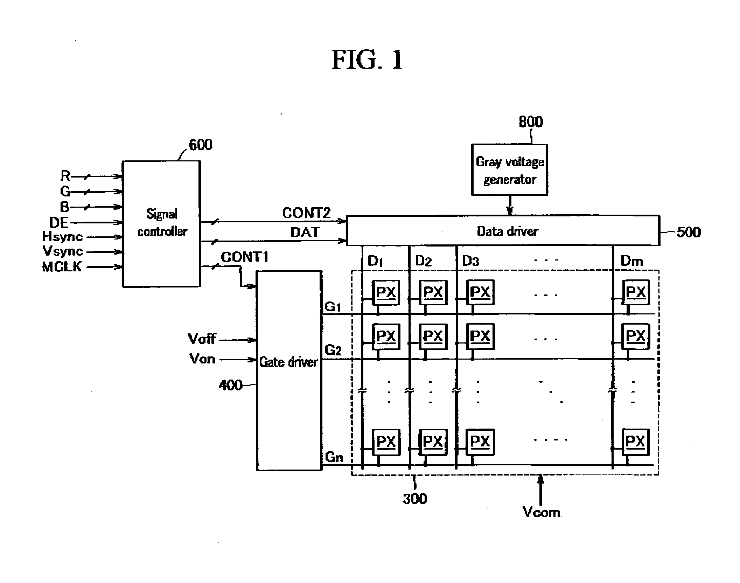

FIG. 1 is a block diagram of an LCD device according to an exemplary embodiment of the present invention, and FIG. 2 is an, equivalent circuit diagram of a pixel of the LCD device shown in FIG. 1.

As shown in FIG, 1, an LCD device according to an exemplary embodiment of the present invention includes a liquid crystal (LC) panel assembly 300, a gate driver 400 connected to the panel assembly 300, a data driver 500 connected to the panel assembly 300, a gray voltage generator 800 connected to the data driver 500, and a signal controller 600 that controls the above-described elements.

As shown in FIG. 1, the LC panel assembly 300 includes signal lines G1 to Gn and D1 to Dm, and pixels PX connected to the signal lines G1 to Gn and D1 to Dm and arranged substantially in a matrix. In the structural view shown in FIG. 2, the LC panel assembly 300 includes a lower panel 100 and an upper panel 200 opposite to the lower panel 100, and a liquid crystal layer 3 interposed between the lower panel 100 and the upper panel 200.

The signal lines G1 to Gn and D 1 to Dm include gate lines G1 to Gn to transmit gate signals, also referred to as "scanning signals", and data lines D1 to Dm to transmit data signals. The gate lines G 1 to Gn extend substantially in a row direction and substantially parallel to each other, while the data lines D1 to Dm extend substantially in a column direction and substantially parallel to each other.

As shown in FIG. 2, each pixel PX is connected to an i-th (i=1, 2,..., n) gate line Gi and a j-th (j=1, 2,..., m) data line Dj. Each pixel PX includes a switching element Q connected to the gate line Gi and the data line Dj, and may include a liquid crystal capacitor C_{LC} and a storage capacitor C_{ST} connected to the switching element Q.

The switching element Q may be a three-terminal element of a TFT included in the lower panel 100. The switching element Q has a control terminal connected to the gate line Gi, an input terminal connected to the data line Dj, and an output terminal connected to the liquid crystal capacitor C_{LC} and the storage capacitor C_{ST}.

The liquid crystal capacitor C_{LC} uses a pixel electrode 191 of the lower panel 100 as a first terminal and a common electrode 270 of the upper panel 200 as a second terminal. The liquid crystal layer 3 between the pixel electrode 191 and the common electrode 270 functions as a dielectric material. The pixel electrode 191 is connected to the switching element Q, and the common electrode 270 may be arranged on the entire surface of the upper panel 200 and receives a common voltage Vcom, In an alternate embodiment of the present invention, the common electrode 270 may be disposed on the lower panel 100, At least one of the pixel electrode 191 and the common electrode 270 may have a linear shape or a bar shape.

In the storage capacitor C_{ST} serving to assist the liquid crystal capacitor C_{LC}, a separate signal line (not shown) may be provided on the lower panel 100 and may overlap with the pixel electrode 191 with an insulator therebetween. The separate signal line may be a first terminal of the storage capacitor C_{ST} and may receive a predetermined voltage such as the common voltage Vcom. The pixel electrode 191 may be a second terminal of the storage capacitor C_{ST}, Alternately, the pixel electrode 191 may be overlapped with a previous gate line having an insulating layer arranged therebetween to form the storage capacitor Cₛᵣ,

To implement color display, each pixel PX may uniquely display a primary color in a spatial division method of driving the LCD device, or each pixel PX may display the primary colors alternately depending on time in a temporal division method of driving the LCD device, so that a desired color is recognized through a spatial and temporal sum of these primary colors, An example of the primary colors may include three primary colors such as red, green, and blue. FIG. 2 shows an example of spatial division, where each pixel PX includes a color filter 230 that represents one of the primary colors on a region of the upper panel 200 corresponding to the pixel electrode 191. In an alternate embodiment, the color filter 230 may be formed on or below the pixel electrode 191 of the lower panel 100.

At least one polarizer (not shown) for polarizing light may be provided on outer surfaces of the LC panel assembly 300.

Returning to FIG. 1, the gray voltage generator 800 generates two gray voltage sets, or reference gray voltage sets, corresponding to transmittance of each pixel PX, One gray voltage set has voltage values that are positive with respect to the common voltage Vcom, and the other gray voltage set has voltage values that are negative with respect to the common voltage Vcom. The gray voltage generator 800 generates gray voltage sets through a resistor string including resistors connected in series, and all resistors in the resistor string have the same resistance value.

The gate driver 400 is connected to the gate lines G 1 to Gn of the LC panel assembly 300 to apply gate signals including a gate-on voltage signal Von and a gate-off voltage signal Voff to the gate lines G1 to Gn.

The data driver 500 is connected to the data lines D1 to Dm of the LC panel assembly 300 to select the gray voltages from the gray voltage sets generated by the gray voltage generator 800 and apply the gray voltages as data signals to the data lines D1 to Dm. Alternatively, where the gray voltage generator 800 generates only a predetermined number of reference gray voltages in the gray voltage sets instead of all of the gray voltages, the data driver 500 may generate additional gray voltages for all of the gray voltages by dividing the reference gray voltages. The data driver 500 may then select the data signals from among the generated additional gray voltages. A resistor string including resistors connected in series may be also formed in the data driver 500 to divide the voltages. The resistor string to be formed in the data driver 500 is formed of resistors having the same resistance value,

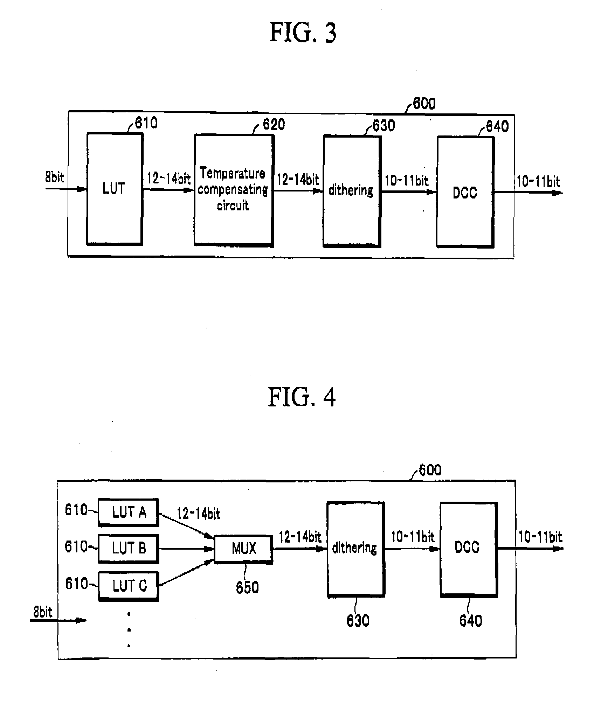

The signal controller 600 controls the gate driver 400 and the data driver 500. As shown in FIG. 3, the signal controller 600 includes a dynamic capacitance compensation (DCC) unit 640, which will be described in more detail below, and corrects and processes input image signals R, G, and B depending on the display characteristics of the LCD device that may be varied, for example, according to ambient temperature.

The gate driver 400, the data driver 500, the gray voltage generator 800, and the signal controller 600 may be directly arranged on the LC panel assembly 300 as one or more Integrated Circuit (IC) chips. Alternatively, the gate driver 400, the data driver 500, the gray voltage generator 800, and the signal controller 600 may be a tape carrier package ("TCP") arranged on a flexible printed circuit ("FPC") film (not shown) in the LC panel assembly 300. As a further alternative, the gate driver 400, the data driver 500, the gray voltage generator 800, and the signal controller 600 together with the gate lines G 1 to Gn, the data lines D 1 to Dm, and the switching elements Q may be integrated with the LC panel assembly 300. In addition, the gate driver 400, the data driver 500, the gray voltage generator 800, and the signal controller 600 may be integrated in a single chip.

Now, a display operation of the LCD device shown in FIG. 1 will be described in detail.

The signal controller 600 receives input image signals R, G, and B and input control signals for controlling the display thereof from an external graphics controller (not shown). The input image signals R, G, and B contain luminance information for each pixel PX for one or more frames of an image to be displayed. The luminance information has a predetermined number of grays, such as 256 (=2⁸), The input control signals may include a vertical synchronization signal Vsync, a horizontal synchronization signal Hsync, a main clock signal MCLK, and a data enable signal DE.

The signal controller 600 processes the input image signals R, G, and B according to an operating condition of the LC panel assembly 300 based on the input control signals and the input image signals R, G, and B to generate a gate control signal CONT1, a data control signal CONT2, and a digital image signal DAT. The digital image signal DAT is a digital signal having a predetermined number of values representing grays to be displayed by the pixels PX for one or more frames to generate an image. The signal controller 600 then transmits the generated gate control signal CONT1 to the gate driver 400 and the generated data control signal CONT2 and the digital image signal DAT to the data driver 500,

The gate control signal CONT1 may include a scanning start signal STV for instructing the gate driver 400 to start scanning and at least one clock signal for controlling the output period of the gate-on voltage signal Von, The gate control signal CONT1 may further include an output enable signal OE for defining the duration of the gate-on voltage signal Von.

The data control signal CONT2 may include a horizontal synchronization start signal STH for informing the data driver 500 of the start of transmission of image data for a row of pixels PX, a load signal LOAD to instruct the data signals to be applied to the data lines D1 to Dm, and a data clock signal HCLK. The data control signal CONT2 may further include an inversion signal RVS to invert the voltage polarity of the data signal with respect to the common voltage Vcom. Hereinafter, "the voltage polarity of the data signal with respect to the common voltage Vcom" will be referred to as "the polarity of the data signal."

The data driver 500 receives the digital image signal DAT for a row of pixels PX in response to the data control signal CONT2 from the signal controller 600. The data driver 500 selects gray voltages corresponding to the digital image signal DAT, converts the digital image signal DAT into analog data signals, and applies the analog data signals to the corresponding data lines D1 to Dm.

The gate driver 400 sequentially applies the gate-on voltage signal Von to the gate lines G1 to Gn in response to the gate control signal CONT1 from the signal controller 600, thereby turning on the switching elements Q that are connected to the gate lines G1 to Gn. Then, the analog data signals applied to the data lines D1 to Dm are applied to the corresponding pixels PX through the turned-on switching elements Q.

The potential difference between the voltage of an analog data signal applied to the pixel electrode 191 of a pixel PX and the common voltage Vcom appears as a charge voltage of the LC capacitor C_{LC}, that is, a pixel electrode voltage. The arrangement ofLC molecules varies depending on the magnitude of the pixel electrode voltage, and the polarization of light passing through the LC layer 3 varies according to the arrangement of the LC molecules. Therefore, the transmittance of the polarized light is controlled by the polarizer attached to the panel assembly 300, whereby the pixels PX display the luminance represented by gray scales of the digital image signal DAT.

By repeating this procedure by a horizontal period 1H, which is equal to one period of the horizontal synchronization signal Hsync and the data enable signal DE, the gate lines G1 to Gn are sequentially supplied with the gate-on voltage signal Von during a frame, thereby applying the data signals to the pixels PX per pixel row to display an image for a frame.

When a current frame is finished and the next frame starts, the inversion signal RVS that is applied to the data driver 500 may be controlled such that the polarity of the data signals is reversed with respect to the polarity of the previous frame. This process is referred to as "frame inversion." Here, even within one frame, the polarity of the data signals flowing in a data line may vary using, for example, row inversion or dot inversion, or the polarities of the data signals applied to the pixels PX in a row may be different from each other using, for example, column inversion or dot inversion, in accordance with the characteristics of the inversion signal RVS.

If a voltage difference is applied between two terminals of the liquid crystal capacitor C_{LC}, the liquid crystal molecules of the liquid crystal layer 3 are reoriented towards a stable state corresponding to the potential difference across the liquid crystal capacitor C_{LC}. The reorientation of the LC molecules takes time since the response speed of the LC molecules is not instantaneous. The LC molecules continue to reorient themselves to vary the light transmittance until they reach the stable state where the application of the voltage difference across the LC capacitor C_{LC} is maintained. When the LC molecules reach the stable state and the reorientation stops, the light transmittance becomes constant.

A pixel voltage to achieve the stable state is referred to as a target pixel voltage, and a light transmittance in the stable state is referred to as a target light transmittance. The target pixel voltage and the target light transmittance have a one-to-one correspondence for a defined gamma curve. Since the target pixel voltage is achieved by applying a data voltage to the pixel electrode 191, the target pixel voltage may also be referred to as the target data voltage.

However, since the time to turn on a switching element Q of each pixel PX to apply a data voltage to the pixel is limited, it is difficult for the LC molecules in the pixel PX to reach the stable state during the application of the data voltage. Additionally, when the switching element Q is turned off, the voltage difference between the two terminals of the LC capacitor C_{LC} may not dissipate instantly, and thus the LC molecules may continue to be reoriented toward a stable state.

The reorientation of the LC molecules changes the dielectric properties of the LC layer 3, and thus the capacitance of the LC capacitor C_{LC} changes. Ignoring leakage current, the total amount of electrical charges stored in the LC capacitor C_{LC} may remain constant when the switching element Q turns off since one terminal of the LC capacitor C_{LC} may be floated. Therefore, the variation of the capacitance of the LC capacitor C_{LC} results in a variation of the voltage difference across the two terminals of the LC capacitor C_{LC}.

Consequently, when a pixel PX is supplied with a data voltage corresponding to a target data voltage, which is determined according to the stable state, an actual pixel voltage of the pixel PX may be different from the target data voltage. Further, the pixel PX may not reach a target light transmittance corresponding to the target data voltage during a frame. The difference between the actual pixel voltage and the target data voltage may increase as the difference increases between the target light transmittance and the pixel PX's light transmittance at the beginning of a frame.

Accordingly, a data voltage applied to the pixel PX may be higher or lower than a target data voltage in order to improve the response towards a target light transmittance and to compensate for a difference between the target light transmittance and the pixel PX's light transmittance at the beginning of a frame. Applying a data voltage to the pixel PX that is higher or lower than a target data voltage may be achieved by dynamic capacitance compensation (DCC).

According to the exemplary embodiment of the present invention, DCC, which may be performed by the signal controller 600, modifies a current image signal gN of a current frame for a pixel PX to generate a first modified image signal gN'. The first modified image signal gN' is based on a previous image signal gN-1 of an immediately previous frame for the pixel PX. The first modified image signal gN' may be experimentally obtained. The difference between the first modified image signal gN' and the previous image signal gN-1 may be greater than the difference between the current image signal gN and the previous image signal gN-1. However, when the current image signal gN and the previous image signal gN-1 are equal to each other or have a small difference therebetween, the first modified image signal gN' may be equal to the current image signal gN. In this instance, the current image signal gN may not be modified.

In this way, the data voltage applied to a pixel PX by the data driver 500 may be higher than the target data voltage or lower than the target data voltage. For example, where the previous image signal gN-1 is higher than the current image signal gN, the first modified image signal gN' may be lower than the current image signal gN. Conversely, where the previous image signal gN-1 is lower than the current image signal gN, the first modified image signal gN' may be higher than the current image signal gN.

This image signal modification may use a storage unit such as a frame memory for storing the previous image signal gN-1. In addition, there may be a lookup table for storing a relationship between a current image signal gN and a first modified image signal gN' depending on the previous image signal gN-1.

Since the size of a lookup table able to store the first modified image signals gN' for all pairs of previous image signals gN-1 and current image signals gN may be very large, the first modified image signals gN' for only some predetermined pairs of previous image signals gN-1 and current image signals gN may be stored in the lookup table. These first modified image signals gN' may be referred to as reference modified image signals gN'. The first modified image signals gN' for remaining pairs of previous image signals gN-1 and current image signals gN may be obtained by interpolation based on the predetermined pairs of previous image signals gN-1 and current image signals gN and the corresponding reference modified image signals gN', The interpolation is done to determine the reference modified image signals gN' for predetermined pairs of previous image signals gN-1 and current image signals gN close to the actual pair of a previous image signal gN-1 and a current image signal gN. Then, the first modified image signal gN' for the actual pair of a previous image signal gN-1 and a current image signals gN may be based on the reference modified image signals gN'.

For example, each image signal that is a digital signal is divided into most significant bits (MSBs) and least significant bits (LSBs). The reference modified image signals gN' for the predetermined pairs of previous image signals gN-1 and current image signals gN having zero LSBs may be stored in the lookup table, For an actual pair of a previous image signal gN-1 and a current image signal gN, some reference modified image signals gN' associated with MSBs of the signal pair may be determined from the lookup table, and a first modified image signal gN' for the signal pair is calculated from LSBs of the previous image signal gN-1, the current image signal gN, and the reference modified image signals gN' determined from the lookup table. Therefore, DCC processing may provide a modified data voltage to apply to a pixel PX in a current frame that is higher or lower than a target data voltage based on a level of a data voltage from a previous frame.

However, the target light transmittance may not be obtained by the above-described method. In the case of target light transmittance, a predetermined voltage having an intermediate magnitude may be pre-applied in the previous frame to pre-tilt the LC molecules, and then a data voltage is applied in the current frame.

For this purpose, the signal controller 600 or an image signal modifier may modify a current image signal gN in consideration of a next image signal gN+1 of the next frame as well as a previous image signal gN-1. For example, if the next image signal gN+1 is very different from the current image signal gN even though the current image signal gN is equal to the previous image signal gN-1, the current image signal gN may be modified in preparation of the next frame.

In this case, to get the modified image signal gN' a frame memory for storing the previous image signal gN-1 and the current image signal gN is included, a lookup table for storing modified image signals for pairs of previous image signals gN-1 and current image signals gN is included, and as necessary, a lookup table for storing modified image signals for pairs of current image signals gN and next image signals gN+1 may be included.

The modification of the image signals and the data voltages may or may not be performed for the highest gray or the lowest gray. In order to modify the highest gray or the lowest gray, the range of the gray voltages generated by the gray voltage generator 800 may be expanded compared with the range of the target data voltages required for obtaining the range of the target luminance or the target transmittance represented by the grays of the image signals.

Hereinafter, a structure of the signal controller 600 for performing the modification of the image signals and the data voltages will be described.

FIG. 3 is a block diagram of a signal controller according to an exemplary embodiment of the invention.

The signal controller 600 according to an exemplary embodiment of the present invention includes a lookup table 610, a temperature compensating circuit 620, a dithering unit 630, and a DCC unit 640.

First, the present exemplary embodiment will be described where input image data R, G, and B having 8 bits is inputted into the signal controller 600.

The lookup table 610 receives input image data R, G, and B and sends output data corresponding thereto because it stores output data depending on the input image data R, G, and B. The lookup table 610 outputs data having a larger number of bits than input data having 8 bits because it stores data of 12 bits to 14 bits,

The lookup table 610 may store output data corresponding to an adaptive color correction (ACC) for independently modifying gamma curves of input image data R, G, and B.

The data outputted from the lookup table 610 is inputted into the temperature compensating circuit 620. The temperature compensating circuit 620 is a circuit for modifying data to account for a change in the gamma curve of liquid crystals of the liquid crystal layer 3 according to a temperature of the liquid crystals. Data is modified by the temperature compensating circuit 620 so that the data outputted from the lookup table 610 can display the same color at a corresponding temperature in which the LCD device is operating. However, the number of bits remains the same as the number increased in the lookup table 610.

The data modified in the temperature compensating circuit 620 is inputted into the dithering unit 630. The dithering unit 630 performs a dithering process on the input data to reduce the number of bits of the data. As a result, the data is reduced, from 12 bits to 14 bits, down to 10 bits to 11 bits. Dithering generally includes the reconstruction of input data for displaying an image by using only M bits, which is a number of bits that can be processed by a data driving 1C, from input data of N bits. More specifically, dithering is a technique for displaying average gray scales of spatially and temporally adjacent pixels for the N-M LSBs of input data.

The dithered data having 10 bits to 11 bits is inputted into the DCC unit 640. The DCC unit 640 is a portion that performs the aforementioned DCC processing. The DCC unit 640 includes a plurality of lookup tables (not shown), and outputs digital image data DAT of the lookup table corresponding to the input data. Data that cannot be processed as data of the lookup table can be outputted by using an interpolation method, such as the interpolation method described above.

The signal controller 600 having the aforementioned structure outputs digital image data DAT having a larger number of bits than input image data R, G, and B. The digital image data DAT outputted from the signal controller 600 is inputted into the data driver 500. Data processing in the data driver 500 will be described later.

FIG. 4 is a block diagram of a signal controller 600 according to another exemplary embodiment of the present invention.

The signal controller 600 according to another exemplary embodiment of the present invention includes two or more lookup tables 610, a multiplexer 650, a dithering unit 630, and a DCC unit 640.

First, the present exemplary embodiment will be described where input image data R, G, and B having 8 bits is inputted into the signal controller 600,

The lookup table 610 receives input image data R, G, and B and sends output data corresponding thereto because it stores output data depending on the input image data R, G, and B. The lookup table 610 outputs data having a larger number of bits, such as 12 bits to 14 bits, than input data having 8 bits because it stores data of 12 bits to 14 bits.

The number of lookup tables 610 may be two or more, and each lookup table 610 may store data corresponding to a gamma curve that changes according to a temperature in which the LCD device is operating.

The lookup table 610 may store output data corresponding to the ACC for independently modifying gamma curves of R, G, and B.

The data outputted from the lookup table 610 is inputted into the multiplexer 650. The multiplexer 650 outputs data from the lookup table 610 corresponding to the current temperature of the liquid crystals in the liquid crystal layer 3 from among the data outputted from the two or more lookup tables 610. It may be possible to store only a few representative temperatures of the liquid crystals in the lookup table. Then, it may be possible to modify data corresponding to the representative temperatures into data corresponding to the current temperature.

The dithering unit 630 performs a dithering process on the data output from the multiplexer to reduce the number of bits of the data as explained above. As a result, the data is reduced, from 12 bits to 14 bits, down to 10 bits to 11 bits.

A dithered data is inputted into the DCC unit 640. The DCC unit 640 performs the aforementioned DCC processing. The DCC unit 640 includes a plurality of lookup tables (not shown), and outputs digital image data DAT of the lookup table corresponding to the dithered data inputted into the DCC unit 640. Data that cannot be processed as data of the lookup table can be outputted by using an interpolation method, such as the interpolation method described above.

The signal controller 600 having the aforementioned structure outputs digital image data DAT having a larger number of bits than input image data R, G, and B. The digital image data DAT outputted from the signal controller 600 is inputted into the data driver 500. Data processing in the data driver 500 will be described hereinafter.

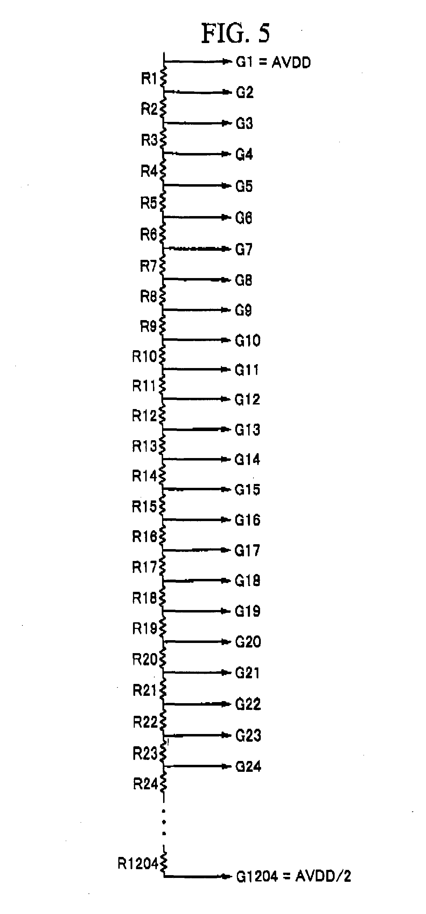

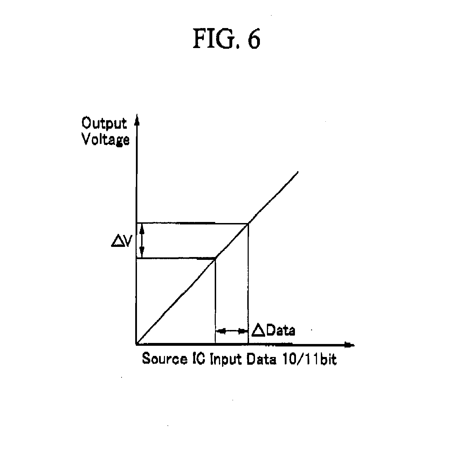

FIG. 5 is a circuit diagram of a gray voltage generator according to an exemplary embodiment of the present invention, and FIG. 6 is a graph illustrating an output voltage depending on a data voltage inputted into a data driver according to an exemplary embodiment of the present invention.

Hereinafter, the structure and operation in which the data driver 500 and the gray voltage generator 800 convert data outputted from the signal controller 600 into data voltages will be described.

First, FIG. 5 illustrates a resistor string of the gray voltage generator 800. FIG. 5 exemplifies a case in which the number of bits of data outputted from the signal controller 600 is 10 bits. The gray voltage generator 800 has a total of 1023 resistors, and the resistance of each resistor is the same. That is, a voltage between the terminals of each resistor changes at a constant ratio, which is illustrated by a graph in FIG. 6. FIG, 6 illustrates an output data voltage depending on each data voltage inputted into the data driver 500.

The operation of the data driver 500 and the gray voltage generator 800 will be described below. The signal controller 600 increases the number of bits to output data having 10 bits to 11 bits and outputs the data to the data driver 500. Hereinafter, additional description will be provided for the case where the signal controller 600 outputs data having 10 bits. The data driver 500 transmits input data to the gray voltage generator 800 and receives the corresponding voltage values and outputs them to data lines, Although data outputted from the signal controller 600 and inputted into the data driver has 10 bits, data actually inputted into the signal controller 600 has 8 bits. Thus, only 256 possible values corresponding to 8 bits may be selected from 1024 possible values corresponding to 10 bits and outputted. Therefore, only 256 values are selected from 1024 values of the gray voltage generator, and thus the remaining gray voltages are not selected and outputted unless the gamma curve is changed and another lookup table corresponding to the current temperature of the liquid crystals is used. However, if the gamma curve is changed due to a change in the temperature of the liquid crystals, different values of 256 gray scales are selected from 1024 gray voltages and outputted. For example, a different group of 256 gray scales corresponding to higher voltages may be selected to improve display characteristics when The gamma curve is changed due to a decrease in the temperature of the liquid crystals. Further, because the resistance of each resistor in the gray voltage generator 800 is the same, the voltage difference between consecutive gray scales is maintained even when the group of 256 gray scales corresponds to higher voltages. Thus, according to the present invention, there is no need to form new lookup tables in response to a change in the gamma curve.

That is, in general, if the ambient temperature changes and the gamma curve of the liquid crystals also changes, the signal controller 600 modifies the data voltages applied to the pixels PX to account for the new gamma curve.. If the number of bits of a voltage value that can be outputted from the gray voltage generator 800 is larger than the number of bits of data inputted into the signal controller 600, and thus the intervals between the voltage values that can be outputted by the gray voltage generator 800 are dense throughout the possible range of data voltages, a change in the voltages outputted by the gray voltage generator 800 can be adapted by modifying the data outputted from the signal controller 600 according to temperature. The data inputted into the signal controller 600 and the voltage values that can be outputted by the gray voltage generator 800 correspond to one-to-many fashion. Thus, even if the data inputted into the signal controller 600 is changed, the gray voltage generator 800 can generate the corresponding gray voltages. Accordingly, the gray voltage generator 800 can smoothly cope with a change in the data inputted into the signal controller 600. Thus, the LCD can adapt to a change in the gamma curve.

In addition, in DCC processing, if the gamma curve is changed according to a temperature change, an actually applied voltage value that is higher or lower than a target data voltage should be changed. A changed actual applied voltage value can be freely generated, thereby optimizing DCC processing.

The above-described embodiments have been described with respect w the case in which the gray voltage generator 800 is formed outside the data driver 500. However, it is also possible to form a resistor string of the gray voltage generator 800 integrally in the data driver 500 to thus generate a gray voltage.

In addition, the resistors of the resistor string formed on the data driver 500 may all have the same resistance value, or several resistors having different resistance values may be repetitively disposed. FIG. 5 illustrates the case in which the resistors of the resistor string all have the same resistance value. The number of resistors included in the resistor string may be 1023, which is one less than 1024, when the number of bits in the data outputted from the signal controller 600 is 10 and the possible gray values = 2¹⁰ = 1024.

As described above, the signal controller outputs data having a larger number of bits than the number of bits in the input image data, and the resistor string formed in the gray voltage generator is formed of resistors of such a number that the signal controller can generate the voltages corresponding to the data having the larger number of bits, thereby enabling optimum DCC processing without modification of the lookup tables even if a gamma curve is changed.

According to the present invention, DCC processing and gamma curve adjustments can be separated from each other and changed independently, thereby easily changing the driving part according to the characteristics of the display device.

It will be apparent to those skilled in the art that various modifications and variation can be made in the present invention without departing from the spirit or scope of the invention, Thus, it is intended that the present invention cover the modifications and variations of this invention provided they come within the scope of the appended claims and their equivalents.

## Claims

1. A driving apparatus of a display device, comprising:
a signal controller to output image data with a bit number that is larger than a bit number of input image data; and
a gray voltage generator to generate gray voltages in response to the image data outputted from the signal controller,

2. The driving apparatus of claim 1, wherein the gray voltage generator comprises:
a resistor string comprising two or more resistors,
wherein the two or more resistors have the same resistance value to generate the gray voltages.

3. The driving apparatus of claim 2, wherein a number of resistors included in the resistor string is less by one than a number of voltages corresponding to the number of bits of the image data outputted from the signal controller.

4. The driving apparatus of claim 1, wherein the signal controller comprises:
a dynamic capacitance compensation (DCC) unit to perform DCC processing.

5. The driving apparatus of claim 1, wherein the signal controller comprises:
a lookup table to output image data corresponding to the input image data inputted into the signal controller;
a temperature compensating circuit to correct the image data outputted from the lookup table according to a temperature of a liquid crystal;
a dithering unit to perform dithering processing on the image data outputted from the temperature compensating circuit; and
a dynamic capacitance compensation (DCC) unit to perform DCC processing on the image data outputted from the dithering unit.

6. The driving apparatus of claim 5, wherein the lookup table outputs image data having a larger number of bits than a number of bits of the input image data inputted into the signal controller.

7. The driving apparatus of claim 6, wherein the input image data inputted into the signal controller has 8 bits,
the image data outputted from the lookup table and the temperature compensating circuit has 12 bits, 13 bits, or 14 bits, and
the image data outputted from the dithering unit or the DCC unit has 10 bits or 11 bits.

8. The driving apparatus of claim 1, comprising:
a data driver to receive the image data outputted from the signal controller, to convert the image data into data voltages using the gray voltages from the gray voltage generator and to output the data voltages.

9. The driving apparatus of claim 8, wherein the data driver comprises:
a data driver resistor string,
wherein the data driver resistor string comprises resistors having the same resistance value.

10. The driving apparatus of claim 8, wherein the gray voltage generator and the data driver are integrally formed.

11. The driving apparatus of claim 1, wherein the signal controller comprises:
two or more lookup tables to output image data corresponding to the input image data inputted into the signal controller;
a multiplexer to receive the image data outputted from the two or more lookup tables and to output image data in response to a temperature of a liquid crystal;
a dithering unit to perform dithering processing on the image data outputted from the multiplexer; and
a dynamic capacitance compensation (DCC) unit to perform DCC processing on the image data outputted from the dithering unit.

12. The driving apparatus of claim 11, wherein the two or more lookup tables output image data having a larger number of bits than a number of bits of the input image data inputted into the signal controller.

13. The driving apparatus of claim 12, wherein the input image data inputted into the signal controller has 8 bits,
the image data outputted from the lookup table and the multiplexer has 12 bits, 13 bits, or 14 bits, and
the image data outputted from the dithering unit or the DCC unit has 10 bits or 11 bits.

14. A driving apparatus of a display device, comprising:
a signal controller to receive input data having a first number of bits and to output output data having a second number of bits that is larger than the first number of bits; and
a gray voltage generator to generate gray voltages in response to the second number of bits,
wherein gray voltages of a number corresponding to the first number of bits are selected from the gray voltages corresponding to the second number of bits and outputted,
and intervals between adjacent gray voltages of the gray voltages corresponding to the second number of bits are substantially constant .

15. The driving apparatus of claim 14, wherein the gray voltage generator comprises:
a resistor string comprising a plurality of resistors,
wherein each resistor of the plurality of resistors has the same resistance value.

16. The driving apparatus of claim 14, wherein the signal controller comprises;
a lookup table to look up data in response to the input data;
a temperature compensating circuit to correct data outputted from the lookup table according to a temperature of a liquid crystal;
a dithering unit to perform dithering processing on data outputted from the temperature compensating circuit; and
a dynamic capacitance compensation (DCC) unit to perform DCC processing on data outputted from the dithering unit.

17. The driving apparatus of claim 16, wherein the lookup table outputs data having a third number of bits that is larger than the first number of bits.

18. The driving apparatus of claim 17, wherein the first number of bits is 8,
the third number of bits is 12, 13, or 14, and,
the second number of bits is 10 or 11.

19. The driving apparatus of claim 14, wherein the signal controller comprises:
a data driver to receive the output data outputted from the signal controller, to convert the output data into data voltages using the gray voltages from the gray voltage generator and to output the data voltages.

20. The driving apparatus of claim 19, wherein the gray voltage generator and the ' data driver are integrally formed.

21. The driving apparatus of claim 14, wherein the signal controller comprises:
two or more lookup tables to look up data corresponding to the input data and to output the data corresponding to the input data;
a multiplexer to receive the data outputted from the two or more lookup tables and to output data corresponding to a temperature of a liquid crystal of the display device;
a dithering unit to perform dithering processing on the data outputted from the multiplexer; and
a dynamic capacitance compensation (DCC) unit to perform DCC processing on the data outputted from the dithering unit.

22. The driving apparatus of claim 21, wherein the two or more lookup tables output data having a third number of bits that is larger than the first number of bits.

23. The driving apparatus of claim 22, wherein the first number of bits is 8,
the third number of bits is 12, 13, or 14, and
the second number of bits is 10 or 11.

24. The driving apparatus of claim 14, wherein the signal controller comprises:
a dynamic capacitance compensation (DCC) unit to perform DCC processing.
